(19) Europäisches Patentamt
European Patent Office
Office européen des brevets

(11) Publication number: **0 013 505**
**A1**

(12) # EUROPEAN PATENT APPLICATION

(21) Application number: 79303020.6

(22) Date of filing: 21.12.79

(51) Int. Cl.³: C 09 B 29/08
D 06 P 3/06

(30) Priority: 05.01.79 GB 7900365

(43) Date of publication of application: 23.07.80 Bulletin 80/15

(84) Designated Contracting States: BE CH DE FR GB IT

(71) Applicant: IMPERIAL CHEMICAL INDUSTRIES LIMITED
Imperial Chemical House Millbank
London SW1P 3JF(GB)

(72) Inventor: Hughes, Nigel
7 Leonardin Close
Shaw OL2 7NH(GB)

(72) Inventor: Lamble, Brian
367 Mortimer Street Shaw Road
Oldham, Lancs.(GB)

(74) Representative: Stephenson, Kenneth et al,
Imperial Chemical Industries Limited Legal Department:
Patents Thames House North Millbank
London SW1P 4QG(GB)

(54) **Water-soluble azobenzene dyes, a method for their preparation and a process for the colouration of polyamide textile material.**

(57) Water-soluble monoazo dyes which, in the form of the free acids, have the formula:-

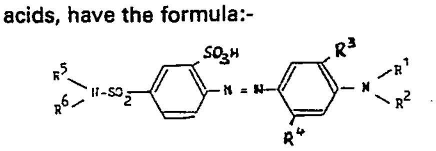

wherein $R^1$ represents hydrogen or optionally substituted alkyl, $R^2$ represents optionally substituted alkyl or optionally substituted aryl, $R^3$ represents hydrogen, halogen, lower alkyl or lower alkoxy, $R^4$ represents hydrogen, halogen, lower alkyl, lower alkoxy or acylamino, $R^5$ represents hydrogen or optionally substituted alkyl and $R^6$ represents hydrogen, optionally substituted alkyl or optionally substituted aryl or $R^5$ and $R^6$ together with the attached nitrogen atom form a 5- or 6-membered heterocyclic ring.

The dyes are applicable as acid dyes to natural and synthetic polyamide textiles giving non-phototropic yellow to red shades.

EP 0 013 505 A1



BAD ORIGINAL

This invention relates to monoazo dyes and their application to textile materials.

According to the invention, there are provided water-soluble monoazo dyes which, in the form of the free acids, have the formula:

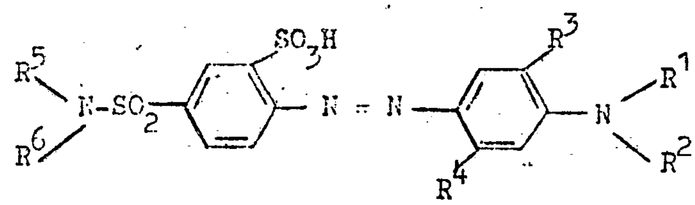 (I)

wherein $R^1$ represents hydrogen or optionally substituted alkyl, $R^2$ represents optionally substituted alkyl or optionally substituted aryl, $R^3$ represents hydrogen, halogen, lower alkyl or lower alkoxy, $R^4$ represents hydrogen, halogen, lower alkyl, lower alkoxy or acylamino, $R^5$ represents hydrogen or optionally substituted alkyl and $R^6$ represents hydrogen, optionally substituted alkyl or optionally substituted aryl or $R^5$ and $R^6$ together with the attached nitrogen atom form a 5- or 6-membered heterocyclic ring.

The expressions "lower alkyl" and "lower alkoxy" used herein mean alkyl and alkoxy groups having from one to four carbon atoms.

Optionally substituted alkyl radicals which may be represented by $R^1$, $R^2$, $R^5$ and $R^6$ include, in particular, optionally substituted lower alkyl radicals, suitable substituents being halogen, hydroxy, cyano, acyloxy, alkoxycarbonyl and phenyl radicals. Optionally substituted aryl radicals which may be represented by $R^2$ and $R^6$ include optionally substituted phenyl radicals. Heterocyclic

BAD ORIGINAL

radicals which may be represented by $R^5$, $R^6$ and the nitrogen atom taken together include piperidino, morpholino and pyrrolidino radicals. Acylamino radicals which may be represented by $R^4$ include acetylamino and benzoylamino.

It is preferred that each of $R^1$ and $R^2$ is benzyl.

The dyes of the invention may be prepared by diazotising a primary amine of the formula:

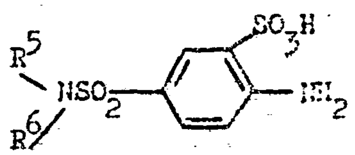

(II)

and coupling the resulting diazo compound with a coupling component of the formula:

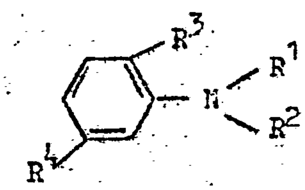

(III)

the symbols $R^1$, $R^2$, $R^3$, $R^4$, $R^5$ and $R^6$ having the meanings given above.

Primary amines of Formula II may be prepared by sulphonating 4-aminobenzenesulphonamides of the formula:

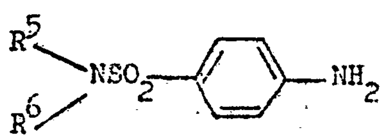

(IV)

wherein $R^5$ and $R^6$ have the meanings given above.

BAD ORIGINAL

The 4-aminobenzenesulphonamides may themselves be made by reacting a 4-nitro- or 4-acylaminobenzenesulphonyl chloride with an amine $R^5R^6NH$ and then reducing the nitro group or hydrolysing the acylamino group.

The reactions leading to the formation of the dyes of the invention may be performed using conditions that have been fully described in the prior art for such reactions. Similarly, the dyes may be isolated by known methods and, as in the case of other dyes containing sulphonic acid groups, it is often convenient to isolate and use the dyes in the form of their water-soluble salts, particularly their alkali metal or ammonium salts and especially sodium salts. It is to be understood that the invention relates to both the free acids and their salts.

The dyes of the invention are suitable for applying to polyamide textile materials such as wool and silk but especially to synthetic polyamide textile materials, for example nylon 66 and nylon 6, using any of the general methods known for the application of acid dyes to such materials. The dyes provide yellow to red shades having a high degree of fastness to wet treatments and to light.

The dyes of the invention have the virtue of giving completely non-phototropic shades on polyamide fibres and in this respect they are superior to dyes having closely related structures. Thus, dyes which have the sulphonic acid group in the radicals represented by $R^5$ instead of in the position shown in Formula I exhibit marked phototropism, that is to say a temporary change of shade on exposure to light, an effect which is undesirable on both furnishing and clothing fabrics.

The invention is illustrated but not limited by the following Examples in which all parts and percentages are by weight.

BAD ORIGINAL

Example 1

A solution of 3.5 parts of sodium nitrite in 25 parts of water is added to a solution of 14.0 parts of 4-ethylaminosulphonylaniline-2-sulphonic acid (100% strength) in 500 parts of water and 5 parts of 32% sodium hydroxide solution at 0-5°C. 25 Parts of 35% hydrochloric acid are then added and stirring is continued at 0-5°C for a further 30 minutes. The excess nitrous acid is then destroyed and the diazo suspension is added to a stirred solution of 13.7 parts of N,N-dibenzylaniline in 750 parts of acetone at 20°C. Stirring is continued for a further 3 hours and the monoazo dyestuff is then filtered off and washed with water. The precipitate is suspended in 500 parts of water, 32% sodium hydroxide solution is added to adjust the pH to 7 and the resulting solution is evaporated to dryness.

When applied to nylon 66 from a weakly acid bath, a strong reddish-yellow shade is obtained which exhibits good wet and light fastness and is non-phototropic.

The 4-ethylaminosulphonylaniline-2-sulphonic acid used in this Example is prepared as follows:

20 Parts of 4-ethylaminosulphonylaniline (100% strength) are dissolved in 400 parts of stirred o-dichlorobenzene (dry) at 80°C and after cooling to 20-25°C, 10 parts of sulphuric acid (98% strength) are added. Stirring at 20-25°C is continued for 1 hour and the temperature is then gradually raised to reflux (180°C) during 30 minutes. Stirring at reflux is continued for 3 hours and the water produced is removed by distillation. After cooling to 20°C the precipitate is filtered off, washed with acetone and dried to give 26.3 parts (94% yield) of 4-ethylaminosulphonylaniline-2-sulphonic acid which analysed as follows:-

BAD ORIGINAL

Calc. : C,34.3; H, 4.3; N, 10.0; S, 22.9% $C_8H_{12}O_5N_2S_2$

Found : C,34.1; H, 4.1; N, 10.3; S, 23.0%

Example 2

A solution of 3.5 parts of sodium-nitrite in 25 parts of water is added to a solution of 18.2 parts of 4-[(ethylhexyl)aminosulphonyl]aniline-2-sulphonic acid (100% strength) in 500 parts of water and 5 parts of 32% sodium hydroxide solution at 0-5°C. 25 Parts of 35% hydrochloric acid are then added and stirring at 0-5°C is continued for a further 30 minutes. The excess nitrous acid is then destroyed and the diazo suspension is added to a stirred solution of 10.3 parts of 3-acetylamino-N,N-diethylaniline (100% strength) in 600 parts of water and 10 parts of 35% hydrochloric acid at 0-5°C. Saturated sodium acetate solution is then added to adjust the pH to 4 and stirring at 0-5°C is continued for 3 hours. 32% Sodium hydroxide solution is then added to adjust the pH to 9 and after adding 120 parts of sodium chloride, the precipitate is filtered off, washed with 10% brine solution and dried. When applied to nylon 66 from a weakly acid bath, a strong orange shade is obtained which exhibits good wet and light fastness and is non-phototropic.

The 4-[(ethylhexyl)aminosulphonyl]aniline-2-sulphonic acid used in this Example is made in 90% yield by the method described for 4-ethylaminosulphonylaniline-2-sulphonic acid in Example 1 replacing the 20 parts of 4-ethylaminosulphonylaniline by 28.4 parts of 4-[(ethylhexyl)aminosulphonyl]-aniline.

BAD ORIGINAL

The following Table gives further Examples of non-phototropic dyestuffs of the invention which may be obtained by diazotising the amine listed in the second column and coupling with the para-coupling amine listed in the third column. The shades obtained on nylon are listed in the fourth column.

| Ex. | Amine | p-Coupling Amine | Shade |
|---|---|---|---|
| 3 | 4-ethylaminosulphonyl-aniline-2-sulphonic acid | N,N-dibenzyl-m-toluidine | Orange |
| 4 | " | diphenylamine | " |
| 5 | " | N-benzyl-N-ethyl-aniline | " |
| 6 | " | N-benzyl-N ethyl-m-toluidine | " |
| 7 | " | 3-benzoylamino-N,N-diethylaniline | Scarlet |
| 8 | 4-[(ethylhexyl)-aminosulphonyl]-aniline-2-sulphonic acid | N-benzyl-N-ethyl-aniline | Orange |
| 9 | " | N,N-dibenzylaniline | " |
| 10 | " | diphenylamine | " |
| 11 | " | N-methyldiphenylamine | Reddish-yellow |
| 12 | " | N,N-diethylaniline | Orange |
| 13 | 4-n-butylamino-sulphonylaniline-2-sulphonic acid | 2-methoxy-5-acetyl-amino-N,N-diethyl-aniline | Red |

BAD ORIGINAL

Dd.30574 0013505

| Ex. | Amine | p-Coupling Amine | Shade |
|---|---|---|---|
| 14 | 4-n-butylamino sulphonyl aniline-2-sulphonic acid | N,N-dibenzylaniline | Reddish-yellow |
| 15 | " | diphenylamine | Orange |
| 16 | " | N-benzyl-N-ethylaniline | " |
| 17 | " | N,N-diethylaniline | " |
| 18 | " | 3-acetylamino-N,N-diethylaniline | Scarlet |
| 19 | 4-diethylamino sulphonyl aniline-2-sulphonic acid | N,N-dibenzylaniline | Orange |
| 20 | " | N-benzyl-N-ethyl aniline | " |

BAD ORIGINAL

The 4-n-butylaminosulphonylaniline-2-sulphonic acid used in Examples 13-18 is made in 90% yield by the method described for 4-ethylaminosulphonylaniline-2-sulphonic acid in Example 1 replacing the 20 parts of 4-ethylaminosulphonylaniline by 22.8 parts of 4-n-butylaminosulphonylaniline.

BAD ORIGINAL

CLAIMS

1. A water-soluble monoazo dye which, in the form of the free acid, has the formula:

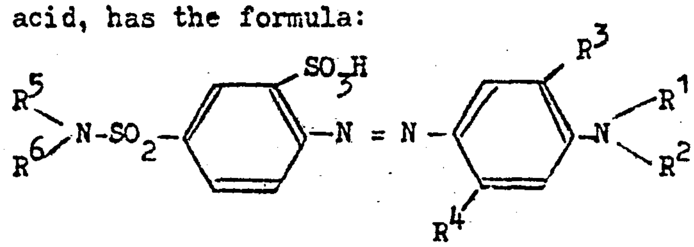

wherein $R^1$ represents hydrogen or optionally substituted alkyl, $R^2$ represents optionally substituted alkyl or optionally substituted aryl, $R^3$ represents hydrogen, halogen, lower alkyl or lower alkoxy, $R^4$ represents hydrogen, halogen, lower alkyl, lower alkoxy or acylamino, $R^5$ represents hydrogen or optionally substituted alkyl and $R^6$ represents hydrogen, optionally substituted alkyl or optionally substituted aryl or $R^5$ and $R^6$ together with the attached nitrogen atom form a 5- or 6-membered heterocyclic ring.

2. A water-soluble monoazo dye according to claim 1 wherein each of $R^1$ and $R^2$ is benzyl.

3. A water-soluble monoazo dye according to claim 1 or claim 2 wherein $R^5$ is hydrogen or lower alkyl and $R^6$ is lower alkyl.

4. A method for the preparation of a water-soluble monoazo dye as defined in claim 1 which comprises diazotising a primary amine of the formula:

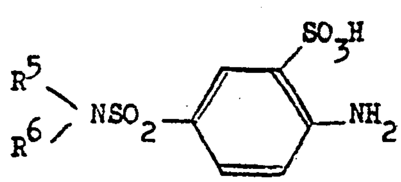

and coupling the resulting diazo compound with a coupling component of the formula:

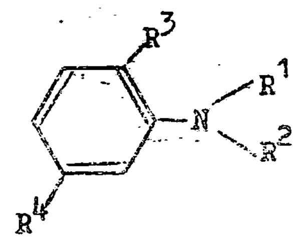

the symbols $R^1$, $R^2$, $R^3$, $R^4$, $R^5$ and $R^6$ having the meanings given in claim 1.

5. A process for the coloration of polyamide textile materials which comprises applying thereto a water-soluble monoazo dye as defined in claim 1.

KS/BH
19.12.79.

BAD ORIGINAL

0013505

European Patent Office

# EUROPEAN SEARCH REPORT

Application number

EP 79 30 3020

## DOCUMENTS CONSIDERED TO BE RELEVANT

| Category | Citation of document with indication, where appropriate, of relevant passages | Relevant to claim |
| --- | --- | --- |
| A | FR - A - 971 104 (CIBA)<br>* Abstract; page 2, column 1, line 28 *<br>& GB - A - 660 196<br>-- | 1 |
| A | GB - A - 498 879 (W.W. GROVES)<br>* Claims 1-4 *<br>-- | 1 |
| A | FR - A - 839 602 (I.G. FARBEN)<br>* Abstract *<br>---- | 1 |

CLASSIFICATION OF THE APPLICATION (Int Cl. 3)

C 09 B 29/08
D 06 P 3/06

TECHNICAL FIELDS SEARCHED (Int.Cl. 3)

C 09 B 29/08
29/06
29/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
| --- | --- | --- |
| The Hague | 28-03-1980 | DELANGHE |

EPO Form 1503.1 06.78